(19) Europäisches Patentamt

European Patent Office

Office européen des brevets

(11) **EP 0 613 909 B1**

(12) **EUROPÄISCHE PATENTSCHRIFT**

(45) Veröffentlichungstag und Bekanntmachung des Hinweises auf die Patenterteilung:
**05.11.1997   Patentblatt 1997/45**

(51) Int Cl.⁶: **C08F 4/654**, C08F 10/00

(21) Anmeldenummer: **94102777.3**

(22) Anmeldetag: **24.02.1994**

(54) **Verfahren zur Herstellung eines Poly-1-olefins**

Process for producing a poly-1-olefin

Procédé de production d'une poly-1-oléfine

(84) Benannte Vertragsstaaten:
**AT DE ES FR GB IT NL**

(30) Priorität: **02.03.1993  DE 4306382**

(43) Veröffentlichungstag der Anmeldung:
**07.09.1994   Patentblatt 1994/36**

(73) Patentinhaber: **HOECHST AKTIENGESELLSCHAFT**
**65929 Frankfurt am Main (DE)**

(72) Erfinder:
• **Breuers, Werner, Dr.**
  **D-65817 Eppstein (DE)**
• **Lecht, Rainer, Dr.**
  **D-65779 Kelkheim (DE)**
• **Böhm, Ludwig, Dr.**
  **D-65795 Hattersheim (DE)**

(56) Entgegenhaltungen:
EP-A- 0 180 338          EP-A- 0 249 869
EP-A- 0 257 131          EP-A- 0 563 815
GB-A- 2 047 255

**Beschreibung**

Die Erfindung bezieht sich auf ein Verfahren zur Herstellung eines kugelförmigen Poly-1-olefins mittels eines hochaktiven, kugelförmigen Ziegler-Katalysators.

Es sind bereits eine Vielzahl von Katalysatoren des Ziegler-Typs zur Polymerisation von alpha-Olefinen bekannt. Viele dieser Katalysatoren basieren auf Magnesiumchlorid als Trägermaterial, das durch Umsetzung einer magnesiumorganischen Verbindung mit einer Verbindung R'-Cl, wie z.B. Tetrachlormethan, erhalten wird (vgl. US 4 442 225, US 4 439 539, DE 30 10 202).

Dabei ist es jedoch nicht möglich, ein Magnesiumchlorid mit kugelförmigen Teilchen zu erhalten.

Andererseits ist bekannt, daß sphärisches Magnesiumchlorid bei der Umsetzung einer magnesiumorganischen Verbindung $R_2Mg$ mit einer chlororganischen Verbindung R'-Cl in Gegenwart einer aluminiumorganischen Verbindung, wie Triethylaluminium, und einer Elektronendonorverbindung, wie Diisoamylether, entsteht (vgl. EP 99 284). Einschränkend gilt hierbei, daß R' ein Kohlenwasserstoffrest mit drei oder mehr C-Atomen sein muß und daß das dem Chlor benachbarte Kohlenstoffatom entweder ein sekundäres oder tertiäres C-Atom sein muß.

Bekannt sind weiterhin Verfahren, bei denen durch Umsetzung einer magnesiumorganischen Verbindung (z. B. ®BOMAG-A, Witco GmbH) mit einer chlororganischen Verbindung, einem Elektronen-Donator und einer Übergangsmetallverbindung kugelförmige Ziegler-Katalysatoren gebildet werden (vgl. EP 249 869, WO 9 200 332). Zur Bindung der Übergangsmetallkomponente sind in diesen Fällen Elektronen-Donatoren notwendig.

Es wurde nun gefunden, daß ein hochaktiver, kugelförmiger Ziegler-Katalysator durch Umsetzung des Reaktionsproduktes aus einer magnesiumorganischen Verbindung, einer chlororganischen Verbindung und gegebenenfalls einer aluminiumorganischen Verbindung mit Alkoholen und Übergangsmetallverbindungen hergestellt werden kann, wobei auf die Zugabe des Alkohols auch verzichtet werden kann. Weiterhin wurde gefunden, daß der Katalysator besonders vorteilhaft in einem Gasphasen-Polymerisationsverfahren eingesetzt werden kann.

Die Erfindung betrifft somit ein Verfahren zur Herstellung eines Polyolefins durch Polymerisation von alpha-Olefinen bei einer Temperatur von 50 bis 150°C und einem Druck von 1 bis 40 bar in Gegenwart eines Katalysators bestehend aus einer Übergangsmetallkomponente (Komponente A) und einer metallorganischen Verbindung (Komponente B), dadurch gekennzeichnet, daß die Komponente A hergestellt wurde durch

a) Umsetzung einer magnesiumorganischen Verbindung der Formel $R^1_xMgR^2_{2-x}$, worin $R^1$ und $R^2$ gleiche oder verschiedene Alkylreste mit 2 bis 12 Kohlenstoffatomen sind und x eine Zahl zwischen 0 und 2 ist, mit einem aliphatischen primären Chlorkohlenwasserstoff in einer Menge von 0,5 bis 2,5 mol des Chlorkohlenwasserstoffs, bezogen auf 1 mol der magnesiumorganischen Verbindung, und gegebenenfalls einer aluminiumorganischen Verbindung der Formel $AlR^3_n(OR^4)_{3-n}$, worin $R^3$ und $R^4$ gleiche oder verschiedene Alkylreste mit 1 bis 8 Kohlenstoffatomen sind und n 0, 1, 2 und 3 bedeutet, oder dem Umsetzungsprodukt von Aluminiumtrialkylen oder Aluminiumdialkylhydriden mit 4 bis 20 Kohlenstoffatome enthaltenden Diolefinen, bei einer Temperatur von 30 bis 110°C,

b) Behandlung des erhaltenen Feststoffs mit einem Alkohol in einer Menge von 0,001 bis 1 mol pro Grammatom des im Feststoff enthaltenen Magnesiums bei einer Temperatur von -20 bis 150°C, und

c) Umsetzung des so erhaltenen Trägermaterials mit einer oder mehreren Verbindungen der Formel $M^1X_m(OR^5)_{4-m}$, worin $M^1$ Titan oder Zirkon, $R^5$ ein Alkylrest mit 2 bis 10 Kohlenstoffatomen, X ein Halogenatom und m eine ganze Zahl von 0 bis 4 ist, in einer Menge von 0,1 bis 5 mol pro Grammatom des im Trägermaterial enthaltenen Magnesiums bei einer Temperatur von 20 bis 180°C.

Zunächst wird ein kugelförmiger Feststoff gebildet. Dazu wird eine magnesiumorganische Verbindung mit einer organischen Chlorverbindung und gegebenenfalls einer aluminiumorganischen Verbindung umgesetzt.

Die magnesiumorganische Verbindung ist ein Magnesiumdialkyl der Formel $R^1_xMgR^2_{2-x}$, worin $R^1$ und $R^2$ gleiche oder verschiedene Alkylreste mit 2 bis 12 Kohlenstoffatomen sind und x eine Zahl zwischen 0 und 2. Bevorzugt werden Di-n-butylmagnesium, Di-n-octylmagnesium, n-Butyl-n-octylmagnesium, n-Butylethylmagnesium, n-Butyl-sec-butylmagnesium oder Gemische dieser Verbindungen. Besonders bevorzugt ist ein Magnesiumdialkyl der Formel $[(n-C_4H_9)_{1,2-1,7}(n-C_8H_{17})_{0,3-0,8}Mg]$, insbesondere $[(n-C_4H_9)_{1,5}(n-C_8H_{17})_{0,5}Mg]$.

Als aliphatischer primärer Chlorkohlenwasserstoff ist beispielsweise Tetrachlormethan, Trichlormethan, Methylenchlorid, 1-Chlorpropan oder 1,1,1-Trichlorethan geeignet, wobei auch Gemische eingesetzt werden können. Bevorzugt verwendet werden Trichlormethan und Tetrachlormethan.

Als aluminiumorganische Verbindung ist eine Alkyl- oder Alkoxyaluminiumverbindung der Formel $AlR^3_n(OR^4)_{3-n}$, geeignet, worin $R^3$ und $R^4$ gleiche oder verschiedene Alkylreste mit 1 bis 8 Kohlenstoffatomen sind und n 0, 1, 2 und 3 bedeutet. Ebenso geeignet ist auch das Umsetzungsprodukt von Aluminiumtrialkylen oder Aluminiumdialkylhydriden mit 4 bis 20 Kohlenstoffatome enthaltenden Diolefinen, vorzugsweise Isopren. Beispielsweise sei Aluminiumisoprenyl genannt.

Zur Darstellung des aus kugelförmigen Teilchen bestehenden Feststoffs wird die magnesiumorganische Verbindung und gegebenenfalls die aluminiumorganische Verbindung in einem inerten, flüssigen Kohlenwasserstoff unter Stickstoff- oder Argonatmosphäre gelöst. Diese Lösung wird unter gleichmäßigem Rühren bei einer Temperatur von 30 bis 110°C, bevorzugt von 40 bis 80°C, mit einer Lösung der chlororganischen Verbindung zusammengebracht. Die Umsetzung kann in der Weise durchgeführt werden, daß man die chlororganische Verbindung zu der Lösung der magnesiumorganischen Verbindung in dem flüssigen Kohlenwasserstoff gibt, oder umgekehrt.

Bei dieser Umsetzung kann sowohl die Reaktionszeit als auch der Verdünnungsgrad der Reaktanden in weiten Grenzen variiert werden. Die Reaktionszeit beträgt 30 min bis zu mehreren Stunden, vorzugsweise 1 Stunde bis 5 Stunden. Die Reaktanden werden als 0,5 bis zu 15 molare Lösungen eingesetzt.

Der Ansatz enthält bis zu 2,5 mol, bevorzugt bis zu 2,0 mol der chlororganischen Verbindung, bezogen auf ein mol der magnesiumorganischen Verbindung.

Es entsteht eine Suspension eines aus kugelförmigen Teilchen bestehenden Feststoffs. Die Suspension wird ohne weitere Waschschritte dem nächsten Reaktionsschritt zugeführt. Der Feststoff kann jedoch auch zunächst in getrockneter Form isoliert, gelagert und zur späteren Weiterverarbeitung resuspendiert werden.

Zur Suspension des aus kugelförmigen Teilchen bestehenden Feststoffes wird ein aliphatischer Alkohol gegeben. Der Alkohol wird im Molverhältnis 0,001 bis 1, bevorzugt 0,01 bis 0,5 mol, bezogen auf ein Grammatom Magnesium bei einer Temperatur von -20 bis 150°C, bevorzugt 20 bis 90°C, zu dem Feststoff gegeben. Die Reaktionszeit beträgt in Abhängigkeit von der Reaktivität der Reaktanden 0,1 bis 3 Stunden, vorzugsweise bis zu 1 h.

Eingesetzt werden aliphatische oder cycloaliphatische Alkohole oder Alkohole mit mehreren Hydroxyfunktionen. Beispiele sind Methanol, Ethanol, n-Propanol, i-Propanol, n-Butanol, sec-Butanol, t-Butanol, Pentanole, Hexanole, Amylalkohol, Ethylhexanol, Glykol, Glycerin und Cyclohexanol. Besonders bevorzugt wird Ethanol verwendet.

Das auf diese Weise erhaltene kugelförmige Trägermaterial wird unter Stickstoff- oder Argonatmosphäre mit einer Übergangsmetallverbindung der Formel $M^1X_m(OR^5)_{4-m}$ umgesetzt, worin $M^1$ Titan oder Zirkon, $R^5$ ein Alkylrest mit 2 bis 10 Kohlenstoffatomen, X ein Halogenatom, bevorzugt Chlor, und m eine ganze Zahl von 0 bis 4, bevorzugt aber 2 oder 4 ist. Man kann ein Gemisch aus mehreren dieser Verbindungen oder mehrere dieser Verbindungen nacheinander einsetzen. Möglich ist auch die parallele Zugabe von Alkohol und einer oder mehrerer Verbindungen des Typs $M^1X_m(OR^5)_{4-m}$.

Bevorzugte Verbindungen sind z. B. $TiCl_4$, $TiCl_3(OC_2H_5)$, $TiCl_3(O\text{-}iC_3H_7)$, $TiCl_2(OC_2H_5)_2$, $TiCl_2(O\text{-}iC_3H_7)_2$, $TiCl_2(O\text{-}CH_2C_6H_5)_2$, $TiCl(OC_2H_5)_3$, $Ti(OC_2H_5)_4$ und $ZrCl_4$.

Ganz besonders bevorzugt ist $TiCl_4$.

In der vorstehend beschriebenen Reaktion wird die Titan- oder Zirkonverbindung in einer Menge von 0,5 bis 5 mol, bevorzugt 0,8 bis 2,5 mol, insbesondere 1 mol, bezogen auf ein Grammatom Magnesium des kugelförmigen Trägermaterials, eingesetzt. Die Reaktionstemperatur beträgt 20 bis 180°C, bevorzugt 60 bis 100°C, und die Reaktionszeit beträgt in Abhängigkeit von der geforderten Titan- bzw. Zirkonbelegung 30 min bis zu mehreren Stunden, bevorzugt 1 bis 2 Stunden.

Die auf diese Weise hergestellt Katalysatorkomponente A wird abschließend bei einer Temperatur von 0 bis 100°C, bevorzugt von 10 bis 60°C, durch wiederholtes Waschen mit einem inerten Kohlenwasserstoff von löslichen Komponenten, wie Metall- oder Halogenverbindungen befreit.

Die erfindungsgemäß hergestellte Katalysatorkomponente A liegt in Form von kugelförmigen Teilchen vor, deren mittlerer Durchmesser 20 bis 150 µm, bevorzugt 40 bis 80 µm, beträgt und die ein Verhältnis von mittlerem Durchmesser in Masse, $D_m$, zu mittlerem Durchmesser in Zahl, $D_n$, von kleiner 1,5, vorzugsweise 1,02 bis 1,3, aufzuweisen.

Zur Erhöhung der mechanischen Stabilität kann die Katalysatorkomponente A vor der eigentlichen Polymerisation einer Präpolymerisation unterzogen werden. Dazu wird die Katalysatorkomponente A in einen Reaktor überführt, in dem ein Suspensionsmittel und Aluminiumalkyl vorgelegt wurden.

Als Suspensionsmittel dient ein gesättigter Kohlenwasserstoff mit 3 bis 15 Kohlenstoffatomen, wie zum Beispiel Propan, Butan, Pentan, Hexan, Heptan, Octan, Nonan, Decan, Cyclohexan oder Gemische derartiger Verbindungen oder deren Isomeren.

Das Aluminiumalkyl ist ein solches mit 1 bis 20 Kohlenstoffatomen in den Alkylresten, wie es unter Komponente B beschrieben wird.

Die Präpolymerisation wird bei einer Temperatur von 50 bis 110°C, vorzugsweise 50 bis 95°C, einem Druck von 0,5 bis 20 bar, vorzugsweise 0,5 bis 8 bar, während einer Zeit von 0,5 bis 6 h, vorzugsweise 0,5 bis 1,5 h durchgeführt.

Die Komponente A wird in Form einer Suspension in einem inerten Kohlenwasserstoff, oder aber nach Abtrennen des Suspensionsmittels trocken oder als Präpolymerisat zur Polymerisation von alpha-Olefinen eingesetzt.

Bevorzugt ist die Polymerisation von Ethylen oder Propylen oder die Copolymerisation von Ethylen mit Propylen oder die Copolymerisation von Ethylen oder Propylen mit einem alpha-Olefin mit 4 bis 10 Kohlenstoffatomen und einer oder mehreren Doppelbindungen, wie z. B. 1-Buten, Isobuten, 4-Methylpenten, 1-Hexen oder 1,3-Butadien.

Die Polymerisation wird sowohl kontinuierlich als auch diskontinuierlich in Suspension in einem gesättigten Kohlenwasserstoff mit 3 bis 15 Kohlenstoffatomen, wie z. B. Propan, Butanen, Pentanen, Hexanen, Heptanen, Octanen, Nonanen, Cyclohexanen oder Gemischen derartiger Verbindungen oder kontinuierlich in der Gasphase durchgeführt. Bevorzugt ist die Polymerisation in der Gasphase.

Im allgemeinen wird Wasserstoff als Molmassenregler verwendet.

Als Komponente B (Cokatalysator) wird eine metallorganische Verbindung der Gruppe I bis III des Periodensystems eingesetzt. Bevorzugt wird eine Aluminiumverbindung der Formel $AlR^6_pY_{3-p}$ eingesetzt, worin p 1, 2 oder 3 und $R^6$ ein Alkyl- oder Arylrest mit 1 bis 20 Kohlenstoffatomen, Y Wasserstoff, ein Halogenatom oder eine Alkoxy- oder Aryloxygruppe mit jeweils 1 bis 20 Kohlenstoffatomen ist.

Beispiele sind Aluminiumtrialkyle oder Aluminiumalkylhydride, weiterhin halogenhaltige aluminiumorganische Verbindungen, wie Dialkylaluminiumhalogenide, Alkylaluminiumdihalogenide oder Alkylaluminiumsesquichloride, die allein oder im Gemisch eingesetzt werden können. Besonders bevorzugt werden als aluminiumorganische Verbindungen chlorfreie Verbindungen eingesetzt. Hierfür eignen sich einerseits Aluminiumtrialkyle $AlR^6_3$ oder Aluminiumdialkylhydride der Formel $AlR^6_2H$, in denen $R^6$ ein Alkylrest mit 1 bis 20 Kohlenstoffatomen bedeutet. Beispiele sind $Al(CH_3)_3$, $Al(C_2H_5)_3$, $Al(C_2H_5)_2H$, $Al(C_3H_7)_3$, $Al(C_3H_7)_2H$, $Al(iC_4H_9)_3$, $Al(iC_4H_9)_2H$, $Al(C_8H_{17})_3$, $Al(C_{12}H_{25})_3$, $Al(C_2H_5)(C_{12}H_{25})_2$, $Al(iC_4H_9)(C_{12}H_{25})_2$.

Andererseits eignen sich als chlorfreie aluminiumorganische Verbindungen auch die Umsetzungsprodukte von Aluminiumtrialkylen oder Aluminiumdialkylhydriden mit Kohlenwasserstoffresten mit 1 bis 6 Kohlenstoffatomen, vorzugsweise $Al(iC_4H_9)_3$ oder $Al(iC_4H_9)_2H$, mit 4 bis 20 Kohlenstoffatome enthaltenden Diolefinen, vorzugsweise Isopren. Beispielsweise sei Aluminiumisoprenyl genannt.

Es können auch Mischungen von metallorganischen Verbindungen der I. bis III. Gruppe des Periodensystems, insbesondere Mischungen verschiedener aluminiumorganischer Verbindungen eingesetzt werden.

Beispielsweise seien folgende Mischungen genannt:

$Al(C_2H_5)_3$ und $Al(iC_4H_9)_3$, $Al(C_2H_5)_2Cl$ und $Al(C_8H_{17})_3$,
$Al(C_2H_5)_3$ und $Al(C_8H_{17})_3$, $Al(C_4H_9)_2H$ und $Al(C_8H_{17})_3$,
$Al(C_4H_9)_3$ und $Al(C_8H_{17})_3$, $Al(C_2H_5)_3$ und $Al(C_{12}H_{25})_3$,
$Al(C_4H_9)_3$ und $Al(C_{12}H_{25})_3$, $Al(C_2H_5)_3$ und $Al(C_{16}H_{33})_3$,
$Al(C_3H_7)_3$ und $Al(C_{18}H_{37})_2(iC_4H_9)$ und Aluminiumisoprenyl (Umsetzungsprodukt von Isopren mit $Al(iC_4H_9)_3$ oder $Al(iC_4H_9)_2H$).

Die Komponente A kann als Suspension direkt mit der Komponente B umgesetzt werden; sie kann jedoch zunächst als Feststoff isoliert, gelagert und zur späteren Weiterverwendung resuspendiert werden.

Das Mischen der Komponente A und der Komponente B kann vor der Polymerisation in einem Rührkessel bei einer Temperatur von -30 bis 150°C, vorzugsweise -10 bis 120°C erfolgen. Es ist auch möglich, die beiden Komponenten direkt im Polymerisationskessel bei einer Polymerisationstemperatur von 20 bis 150°C zu vereinigen. Die Zugabe der Komponente B kann jedoch auch in zwei Schritten erfolgen, indem vor der Polymerisationsreaktion die Komponente A mit einem Teil der Komponente B bei einer Temperatur von -30 bis 150°C umgesetzt wird und die weitere Zugabe der Komponente B in dem Polymerisationsreaktor bei einer Temperatur von 20 bis 200°C erfolgt.

Die Polymerisationstemperatur beträgt 50 bis 150°C, bevorzugt 50 bis 100°C, und der Druck 1 bis 40 bar, vorzugsweise 3 bis 25 bar.

Besonders vorteilhaft wird der oben beschriebene Katalysator in dem in den Figuren dargestellten Gasphasen-Polymerisations-Verfahren eingesetzt.

Es bedeuten

| (1) | Reaktor oder erster Reaktor | (2) | zweiter Reaktor |
|---|---|---|---|
| (11) | Gasverteiler | (21) | Gasverteiler |
| (12) | Wirbelbett | (22) | Wirbelbett |
| (13) | Kreisgasleitung | (23) | Kreisgasleitung |
| (14) | Verdichter | (24) | Verdichter |
| (15) | Wärmetauscher | (25) | Wärmetauscher |
| (16) | Zuleitung | (26) | Zuleitung |
| (17) | Abgasleitung | (27) | Abgasleitung |
| (18) | Zuleitung | | |
| (19) | Austragsleitung | (29) | Austragsleitung |
| (3) | Vorratsbunker | [41] | Füllstandsmessung |

(fortgesetzt)

| (31) | Absperrorgan | [42] | Druckmessung |
|------|--------------|------|--------------|
| (32) | Entnahmeleitung | [43] | Temperaturmessung |
| (33) | Zuleitung | [44] | Druckdifferenzmessung |
| (34) | Ableitung | [45] | Volumenstrommessung |
| (35) | Absperrorgan | | |
| | | [46] | Gasanalytik |

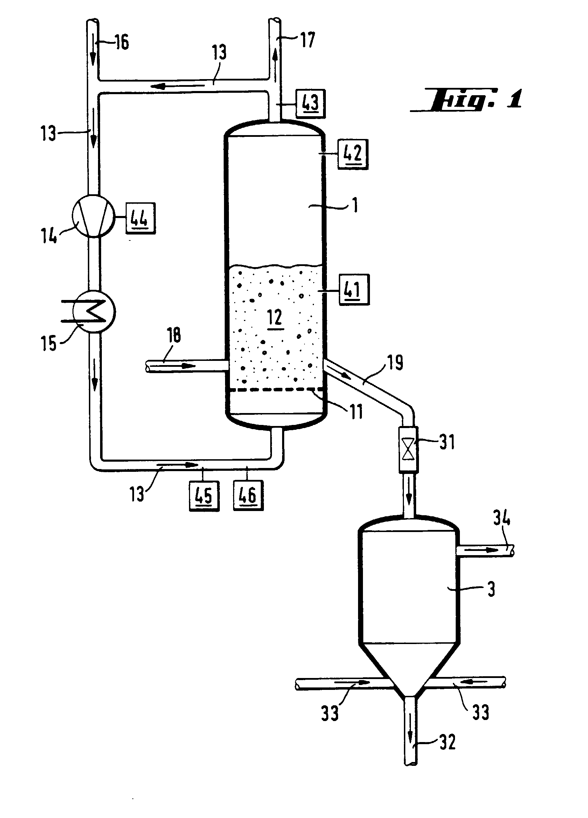

Figur 1 zeigt die für ein einstufiges Polymerisationsverfahren verwendete Apparatur. Der Reaktor (1) mit Gasverteiler (11) ist mit einer Kreisgasleitung (13) versehen. In dieser Kreisgasleitung (13) ist ein Verdichter (14) angeordnet, dem ein Wärmetauscher (15) nachgeschaltet ist. Vor dem Verdichter (14) mündet eine Zuleitung (16) in die Kreisgasleitung (13). Eine weitere Zuleitung (18) führt in den Reaktor (1). Am Kopf des Reaktors (1) befindet sich eine Abgasleitung (17) in der Kreisgasleitung (13). Über die Austragsleitung (19) und das Absperrorgan (31) kann der Reaktor (1) in einen Vorratsbunker (3), welcher mit einer Entnahmeleitung (32) versehen ist, entleert werden. Der Vorratsbunker (3) kann über die Zuleitungen (33) und die Ableitung (34) mit einem inerten Gas gespült werden. Die Apparatur ist mit Geräten zur Füllstandsmessung [41], zur Druckmessung [42], zur Temperaturmessung [43], zur Druckdifferenzmessung [44], zur Volumenstrommessung [45] und zur Bestimmung der Gaszusammensetzung (Gasanalytik) [46] ausgerüstet.

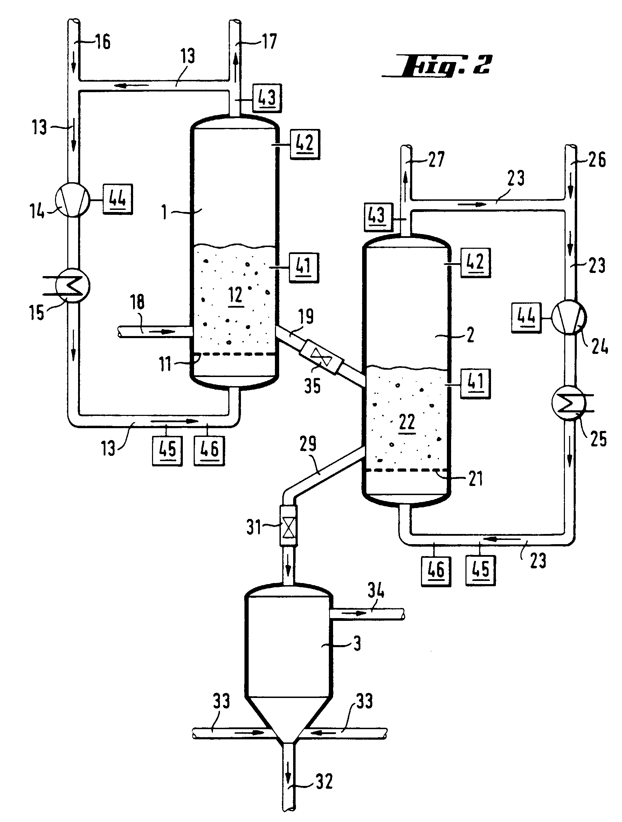

Figur 2 zeigt die für ein zweistufiges Polymerisationsverfahren verwendete Apparatur. Die in Figur 1 beschriebene Apparatur ist ergänzt durch einen zweiten Reaktor (2) mit Gasverteiler (21), der durch die Austragsleitung (19) mit dem Reaktor (1) verbunden ist. Der Reaktor (2) ist mit einer Kreisgasleitung (23) versehen, in welcher ein Verdichter (24) mit nachgeschaltetem Wärmetauscher (25) eingefügt ist. Eine Zuleitung (26) führt vor dem Verdichter (24) in die Kreisgasleitung (23) und am Kopf des Reaktors (2) befindet sich eine Abgasleitung (27). Über eine Austragsleitung (29) mit Absperrorgan (31) kann der Reaktor (2) in den Vorratsbunker (3) entleert werden. Auch der zweite Reaktor ist mit Geräten zur Füllstandsmessung [41], zur Druckmessung [42], zur Temperaturmessung [43], zur Druckdifferenzmessung [44], zur Volumenstrommessung [45] und zur Bestimmung der Gaszusammensetzung (Gasanalytik) [46] ausgerüstet.

Ein grobkörniges, aus kugelförmigen Teilchen bestehendes Wirbelbett (12) wird in den Reaktor (1) gefüllt. In Bodennähe des Reaktors befindet sich der Gasverteiler (11), der das Wirbelbett (12) im Ruhezustand trägt und im Betriebszustand für das im Wirbelgas (Kreisgas) enthaltene feinkörnige Polymere durchlässig ist. Das Reaktionsgas wird durch die Kreisgasleitung (13) unter den Gasverteiler (11) geführt und wirbelt das Wirbelbett (12) nach Durchtritt durch den Gasverteiler (11) vollständig auf. Die Durchmischung des Wirbelbettes (12) durch das Kreisgas kann jedoch auch unterhalb des sogenannten "Wirbelpunktes" erfolgen. Zusätzlich kann der Reaktor (1) mit einem Rührorgan ausgestattet werden, welches auch wandgängig sein kann. Der Kreisgasstrom wird durch einen Verdichter (14) erzeugt. Die Polymerisationswärme wird durch einen Wärmetauscher (15) abgeführt.

Der Katalysator wird als trockener Feststoff, oder suspendiert in einem leichtsiedenden Kohlenwasserstoff, wie beispielsweise Propan, Butan oder Pentan oder als Paste, oberhalb des Gasverteilers (11) seitlich durch die Zuleitung (18) dosiert. Die Zuführung des Katalysators erfolgt vorzugsweise unterhalb der Oberfläche des Wirbelbettes (12). Die Katalysator führende Leitung (18) kann mit einem inerten Gas gespült werden.

Die Reaktanden Ethylen, Wasserstoff, Comonomer (beispielsweise Propylen, Buten, Methylpenten, Hexen) und Cokatalysator (beispielsweise Triethylaluminium, Isoprenylaluminium, Triisobutylaluminium, Ethylaluminiumsesquichlorid), wie auch der Hilfsstoff Stickstoff, werden vor dem Verdichter (14) durch die Leitung (16) in das Kreisgas eingeleitet. Durch die Leitung (17) wird Abgas entnommen. Der Abgasmengenstrom kann gegebenenfalls durch eine Regeleinrichtung kontrolliert werden.

Alle an der Apparatur erfaßten Meßwerte können vorteilhaft einem Prozeßleitsystem zugeleitet und zur Prozeßsteuerung herangezogen werden.

Das freifließende Polymerpulver wird über eine Austragsleitung (19) in einen Vorratsbunker (3) ausgetragen. Die Austragsleitung (19) enthält ein Absperrorgan (31), welches aus einer Schleuse oder aus zwei hintereinandergeschalteten taktweise betriebenen Ventilen bestehen kann, so daß der Austrag kontinuierlich oder quasikontinuierlich erfolgt. Die Austragsleitung (19) ist durch ein genügend großes Gefälle als Falleitung ausgestaltet. Der Vorratsbunker (3) kann durch die Zuleitungen (33) und die Ableitung (34) mit einem Inertgas, beispielsweise Stickstoff, gespült werden, um das Monomere aus dem Produkt zu entfernen. Dabei ist es möglich, das Produkt kontinuierlich durchzusetzen und mit dem Inertgas zu spülen.

Das Verfahren kann einstufig (Figur 1) oder mehrstufig (Figur 2) betrieben werden. Figur 2 zeigt schematisch die zweistufige Betriebsweise. Wie aus der Darstellung hervorgeht, entsprechen die einzelnen Stufen der mehrstufigen Fahrweise im wesentlichen dem einstufigen Verfahren. Das Produkt aus der ersten Stufe gelangt über die Leitung (19) und ein Absperrorgan (35) (welches dem Absperrorgan (31) entspricht) innerhalb des Wirbelbettes (22) in den Reaktor (2). Im Gegensatz zur ersten Stufe fehlt hier die Katalysator-Dosierung. Die Austragsleitung (29) ist als Falleitung ausgebildet und führt das Polymere in den Vorratsbunker (3). In diesem Falle enthält die Leitung (29) das Absperrorgan (31).

Die Teilchen der nach dem erfindungsgemäßen Verfahren hergestellten Polymerisate und Copolymerisate zeichnen sich durch eine kompakte, gleichmäßige kugelförmige Gestalt mit einer sehr engen Korngrößenverteilung aus. Das Verhältnis von mittlerem Durchmesser in Masse, $D_m$, zu mittlerem Durchmesser in Zahl, $D_n$, ist kleiner 1,5, vorzugsweise von 1,02 bis 1,3. Das Verhältnis D/d liegt im Bereich von 1,05 bis 1,2. Der Durchmesser des Polymerkorns liegt im Bereich von 100 bis 1500 µm, vorzugsweise 300 bis 1000 µm. Die Polymeren besitzen eine hohe Schüttdichte.

Ein weiterer Vorteil des erfindungsgemäßen Katalysators liegt in der hohen Katalysatoraktivität, so daß nur sehr geringe Mengen des Katalysators für die Polymerisation notwendig sind. Dadurch müssen die Polymerisate auch keiner zusätzlichen Nachbehandlung, wie beispielsweise aufwendigen Wasch- oder Reinigungsoperationen, unterworfen werden. Weiterhin treten keine unerwünschten Verfärbungen des Produktes durch Katalysatorreste auf.

Der Restgehalt an Titan und/oder Zirkonium in den erfindungsgemäß hergestellten Polymeren beträgt weniger als 10 ppm, vorzugsweise weniger als 3 ppm.

Durch seine gute Wasserstoffansprechbarkeit ist der Katalysator besonders in zweistufigen Verfahren zur Herstellung von Polymeren mit einer breiten, bimodalen Molmassenverteilung geeignet.

Der Ersatz von schwefelhaltigen Elektronen-Donatoren wie Diethylsulfit durch Alkohole wie Ethanol führt zu einer Beseitigung der Geruchsbelästigung und zu erweiterten Einsatzmöglichkeiten des Polymeren.

Durch die kugelförmige Gestalt der Teilchen und die damit verbundene sehr gute Rieselfähigkeit der Polymerisate und Copolymerisate werden erhebliche Vereinfachungen und Vorteile bei der Handhabung, Trocknung und Verarbeitung erzielt.

Die Erfindung wird nachfolgend durch die Beispiele näher erläutert.

Der Schmelzindex MFI (190/5) wurde nach DIN 53735 bei 190°C und bei einer Belastung von 5 kp bestimmt.

Das Verhältnis $D_m$ zu $D_n$ wurde nach NF X 11-630 vom Juni 1981 bestimmt:

$$D_m = [\Sigma\ n_i(D_i)^3 D_i]/[\Sigma\ n_i(D_i)^3]$$

$$D_n = [\Sigma\ n_i D_i]/\Sigma\ n_i$$

$n_i$ =    Anzahl der Proben gleichen Durchmessers

$D_i$ =    Durchmesser der i-ten Probe

Die Korngrößenverteilung $D_m/D_n$ der Komponente A wurde mittels Bildanalyse ermittelt.

Beispiel 1

Zu 306 cm$^3$ einer Lösung von Butyloctylmagnesium (285 mmol Mg) der ungefähren Zusammensetzung [(n-C$_4$H$_9$)$_{1,5}$(n-C$_8$H$_{17}$)$_{0,5}$Mg], welche unter dem Namen ®BOMAG-A in Handel erhältlich ist, in Heptan wurden innerhalb von 90 min bei 70 bis 80°C 27,7 cm$^3$ (285 mmol) CCl$_4$ in 140 cm$^3$ Benzin (Siedebereich 100/120°C) gegeben. Anschließend wurde der Ansatz 120 min bei 85°C gerührt. Die dabei resultierende Suspension wurde innerhalb von 5 Minuten bei einer Temperatur von 85°C mit einer Mischung aus 7,6 cm$^3$ (130 mmol) absolutem Ethanol und 8,4 cm$^3$ Benzin (Siedebereich 100/120°C) versetzt und anschließend eine Stunde bei 85°C gerührt. Danach wurden 18,9 cm$^3$ (171 mmol) TiCl$_4$ bei einer Temperatur von 93 bis 97°C innerhalb von 10 Minuten zugetropft. Die Suspension wurde zwei Stunden bei 98°C gerührt und anschließend 6 x mit je 700 cm$^3$ Benzin (Siedebereich 100/120°C) bei 50 bis 60°C gewaschen. Die Analyse ergab ein Magnesium:Titan:Chlor-Verhältnis von Mg : Ti : Cl = 1 : 0,037 : 2,12. $D_m/D_n$ = 1,18.

Beispiel 2

306 cm$^3$ einer Lösung von Butyloctylmagnesium (285 mmol Mg; wie in Beispiel 1) in Heptan wurden innerhalb von 90 min mit einer Lösung von 49 cm$^3$ (605 mmol) CHCl$_3$ in 140 cm$^3$ Benzin (Siedebereich 100/120°C) versetzt und danach noch 120 min bei 75 bis 77 °C gerührt. Die dabei resultierende Suspension wurde bei 85°C innerhalb von 15 Minuten mit einer Mischung aus 3,6 cm$^3$ (62 mmol) absolutem Ethanol und 12,4 cm$^3$ Benzin (Siedebereich 100/120°C) versetzt und anschließend bei 85°C eine Stunde gerührt. Danach wurden 31,4 cm$^3$ (285 mmol) TiCl$_4$ bei einer Tem-

peratur von 85°C innerhalb von 25 Minuten zugetropft. Die Suspension wurde für 2 Stunden bei 94°C gerührt und anschließend 6 x mit je 700 cm$^3$ Benzin (Siedebereich 100/120°C) bei 50 bis 60°C gewaschen. Die Analyse ergab ein Magnesium:Titan:Chlor-Verhältnis von

Mg : Ti : Cl = 1 : 0,031 : 2,03.

$D_m/D_n = 1,12.$

Beispiel 3 (außerhalb der Erfindung)

Es wurde analog dem Beispiel 2 verfahren, jedoch wurden statt Ethanol 26,2 cm$^3$ (125 mmol) Tetraethylorthotitanat zugegeben. Die Analyse ergab ein Magnesium:Titan:Chlor-Verhältnis von

Mg : Ti : Cl = 1 : 0,174 : 2,22.

$D_m/D_n = 1,08.$

Beispiel 4 (außerhalb der Erfindung)

Es wurde analog Beispiel 1 verfahren, jedoch wurden zusätzlich zu 15 mmol Ethanol 110 mmol Tetraethylorthotitanat zugegeben. Die Analyse ergab ein Magnesium:Titan:Chlor-Verhältnis von

Mg : Ti : Cl = 1 : 0,103 : 2,18.

$D_m/D_n = 1,15.$

Beispiel 5

Es wurde analog dem Beispiel 2 verfahren, jedoch wurden statt 3,6 cm$^3$ Ethanol 5,25 cm$^3$ (90 mmol) Ethanol mit 10,75 cm$^3$ Benzin (Siedebereich 100/120°C) gemischt und bei Raumtemperatur umgesetzt. Die Analyse ergab ein Magnesium:Titan:Chlor-Verhältnis von Mg Ti : Cl = 1 : 0,003 : 2,05.

$D_m/D_n = 1,2.$

Beispiel 6

Es wurde analog Beispiel 5 verfahren, jedoch wurde das Ethanol/Benzingemisch bei 85°C zugegeben. Anschließend wurden 150 cm$^3$ (entsprechend 2,66 mmol Titan) der Katalysatorsuspension entnommen und mit 2,26 cm$^3$ einer 1 molaren Triethylaluminium-Lösung versetzt. Die Mischung wurde 2 h bei 120°C gerührt. Anschließend waren 46 % des Titan (IV) zu Titan (III) reduziert. Die Analyse ergab ein Magnesium:Titan:Chlor-Verhältnis von Mg : Ti : Cl = 1 : 0,029 : 2,04.

Beispiel 7

Es wurde analog Beispiel 6 verfahren, jedoch wurden 1,33 cm$^3$ einer 1 molaren Triethylaluminium-Lösung verwendet. Die Umsetzung erfolgt über 2 Stunden bei Raumtemperatur. Anschließend waren 25 % des Titan (IV) zu Titan (III) reduziert. Die Analyse ergab ein Magnesium:Titan:Chlor-Verhältnis von Mg : Ti : Cl = 1 : 0,003 : 2,05.

Beispiel 8 (außerhalb der Erfindung)

In einem 1,5 dm$^3$ Stahlautoklaven wurden 690 cm$^3$ Benzin (Siedebereich 100/120°C), 20 mmol Triethylaluminium und 93,2 cm$^3$ (entsprechend 10 mmol Titan) der Katalysatorsuspension aus Beispiel 3 vorgelegt. Anschließend wurden 2 bar Argon und 1,1 bar Wasserstoff aufgedrückt, die Präpolymerisation fand nach Zugabe von Ethylen bei einem Gesamtdruck von 6 bar und einer Temperatur von 65°C innerhalb einer Stunde statt.

Beispiel 9 (außerhalb der Erfindung)

Es wurde analog Beispiel 2 verfahren, jedoch wurde auf die Zugabe von Ethanol verzichtet. Die Analyse ergab ein Magnesium:Titan:Chlor-Verhältnis von 1:0,018:2,03.

$D_m/D_n = 1,04.$

Beispiele 10 bis 22

Eine Ethylenpolymerisation wurde entsprechend der Tabelle in einem 1,5 dm$^3$ Stahlautoklaven bei einer Temperatur von 85°C und einem Druck von 6 bar in 800 cm$^3$ Benzin (Siedebereich 100/120°C) durchgeführt. Als Komponente

7

EP 0 613 909 B1

B wurden jeweils 1 mmol Triethylaluminium (TEA), 5 mmol Triisobutylaluminium TIBA oder 5 mmol Isoprenylaluminium (IPRA) zugesetzt. Der Anteil an Polymerteilchen < 100 µm betrug < 0,1 %.

Tabelle

| Ethylenpolymerisation | | | | | | | |
|---|---|---|---|---|---|---|---|
| Bsp. | Komp. A n. Bsp. | Komp. B | $H_2$ [bar] | Ausbeute [gPE/ mmol Ti] | MFI 190/5 [g/10 min] | d50 [µm] | SD [g/l] |
| 10 | 1 | TEA | 3,85 | 23 080 | 12,1 | 470 | 290 |
| 11 | 1 | TIBA | 1,4 | 58 200 | 0,05 | 1480 | 320 |
| 12 | 2 | TIBA | 3,85 | 25 620 | 8,8 | 480 | 340 |
| 13 | 2 | IPRA | 2,1 | 36 420 | 1,4 | 960 | 310 |
| 14* | 3 | IPRA | 4,0 | 1 940 | 46,8 | 340 | 310 |
| 15* | 3 | TIBA | 3,85 | 3 200 | 10,9 | 570 | 300 |
| 16* | 4 | TEA | 3,85 | 11 300 | 25,3 | 720 | 330 |
| 17* | 4 | IPRA | 1,9 | 5 600 | 0,12 | 960 | 290 |
| 18 | 5 | TIBA | 3,85 | 23 250 | 9,1 | 410 | 340 |
| 19 | 6 | TIBA | 3,85 | 24 750 | 8,4 | 440 | 310 |
| 20 | 7 | TEA | 3,85 | 29 200 | 9,1 | 440 | 300 |
| 21 | 7 | TIBA | 2,1 | 54 500 | 0,3 | 1230 | 310 |
| 21* | 8 | TEA | 3,85 | 28 300 | 10,3 | 530 | 320 |
| 22* | 9 | TEA | 3,85 | 21400 | 8,5 | 420 | 310 |

* außerhalb der Erfindung

Beispiel 23

Zur Gasphasenpolymerisation wurde die in Figur 1 schematisch dargestellte Apparatur verwendet. Der Reaktor wurde vor dem Reaktionsstart mit 20 kg Polyethylen, welches einen mittleren Korndurchmesser von 500 µm aufwies, gefüllt. Bei 80°C und 20 bar wurden 45 m³/h eines Gasgemisches aufwärts durch das Schüttbett geleitet. Das Gasgemisch setzte sich aus Ethylen, Wasserstoff und Stickstoff zusammen. Der Reaktor wurde kontinuierlich mit 2 kg/h Ethylen und mit Katalysator beschickt. Der Katalysator aus Beispiel 2 wurde dazu analog Beispiel 8 einer Vorpolymerisation unterworfen. Die Katalysatormenge wurde so geregelt, daß der Ethylenpartialdruck konstant blieb. Die Dosierung des Wasserstoffs - als Molmassenregler - wurde so geregelt, daß das Verhältnis der Partialdrücke von Ethylen und Wasserstoff konstant blieb. Neben dem Katalysator wurde Triethylaluminium als Cokatalysator in einem Verhältnis von Al/Ti von 200:1 dosiert. Das unter diesen Bedingungen erhaltene Polymere besaß einen MFI 190/5 von 3 g/10 min, einen $d_{50}$-Wert von 600 µm, einen Anteil mit $d_{50}$ < 200 µm von weniger als 2 % und eine Schüttdichte von 500g/dm³.

**Patentansprüche**

1. Verfahren zur Herstellung eines Polyolefins durch Polymerisation eines alpha-Olefins bei einer Temperatur von 50 bis 150°C und einem Druck von 1 bis 40 bar in Gegenwart eines Katalysators bestehend aus einer Übergangsmetallkomponente (Komponente A) und einer metallorganischen Verbindung (Komponente B), dadurch gekennzeichnet, daß die Komponente A hergestellt wurde durch

   a) Umsetzung einer magnesiumorganischen Verbindung der Formel $R^1{}_x MgR^2{}_{2-x}$, worin $R^1$ und $R^2$ gleiche oder verschiedene Alkylreste mit 2 bis 12 Kohlenstoffatomen sind und x eine Zahl von 0 bis 2 ist, mit einem aliphatischen primären Chlorkohlenwasserstoff in einer Menge von 0,5 bis 2,5 mol des Chlorkohlenwasserstoffs, bezogen auf 1 mol der magnesiumorganischen Verbindung,

   b) Behandlung des erhaltenen Feststoffs mit einem Alkohol in einer Menge von 0,001 bis 1 mol pro Grammatom des im Feststoff enthaltenen Magnesiums bei einer Temperatur von -20 bis 150°C, und

c) Umsetzung des so erhaltenen Trägermaterials mit einer oder mehreren Verbindungen der Formel $M^1X_m$ $(OR^5)_{4-m}$, worin $M^1$ Titan oder Zirkon, $R^5$ ein Alkylrest mit 2 bis 10 Kohlenstoffatomen, X ein Halogenatom und m eine ganze Zahl von 0 bis 4 ist, in einer Menge von 0,1 bis 5 mol pro Grammatom des im Trägermaterial enthaltenen Magnesiums bei einer Temperatur von 20 bis 180°C.

2. Verfahren nach Anspruch 1, dadurch gekennzeichnet, daß die Umsetzung der magnesiumorganischen Verbindung mit dem aliphatischen primären Chlorkohlenwasserstoff in Gegenwart einer aluminiumorganischen Verbindung der Formel $AlR^3_n(OR^4)_{3-n}$, worin $R^3$ und $R^4$ gleiche oder verschiedene Alkylreste mit 1 bis 8 Kohlenstoffatomen sind und n 0, 1, 2 und 3 bedeutet oder in Gegenwart des Umsetzungsproduktes von Aluminiumtrialkylen oder Aluminiumdialkylhydriden mit 4 bis 20 Kohlenstoffatomen enthaltenden Diolefinen, durchgeführt wurde.

3. Verfahren nach Anspruch 1, dadurch gekennzeichnet, daß ein Magnesiumdialkyl der Formel $[(n-C_4H_9)_{1,2-1,7}(n-C_8H_{17})_{0,3-0,8}Mg]$ verwendet wurde.

4. Verfahren nach Anspruch 1, dadurch gekennzeichnet, daß als Alkohol Ethanol verwendet wurde.

5. Verfahren nach Anspruch 1, dadurch gekennzeichnet, daß als Verbindung der Formel $M^1X_m(OR^5)_{4-m}$, worin $M^1$, $R^5$ und m die in Anspruch 1 genannte Bedeutung haben, $TiCl_4$ eingesetzt wurde.

6. Verfahren nach Anspruch 1, dadurch gekennzeichnet, daß die Katalysatorkomponente A einer Präpolymerisation unterzogen wurde.

7. Verfahren nach Anspruch 1, dadurch gekennzeichnet, daß die Polymerisation kontinuierlich ein- oder mehrstufig in einem Gasphasen-Verfahren erfolgt.

8. Verfahren zur Herstellung eines Polyolefins durch Polymerisation eines alpha-Olefins bei einer Temperatur von 50 bis 150°C und einem Druck von 1 bis 40 bar, ein- oder mehrstufig in einem Gasphasenverfahren, wobei bei einem einstufigen Verfahren die Apparatur besteht aus einem Reaktor (1) mit einem Gasverteiler (11) und einer Kreisgasleitung (13), in welcher ein Verdichter (14) angeordnet ist, dem ein Wärmetauscher (15) nachgeschaltet ist, vor dem Verdichter (14) eine Zuleitung (16) in die Kreisgasleitung (13) mündet, eine weitere Zuleitung (18) in den Reaktor (1) führt, am Kopf des Reaktors (1) sich eine Abgasleitung (17) in der Kreisgasleitung (13) befindet, über eine Austragsleitung (19) und ein Absperrorgan (31) der Reaktor (1) in einen Vorratsbunker (3), welcher mit einer Entnahmeleitung (32) versehen ist, entleert werden kann, und bei einem zweistufigen Verfahren die Apparatur ergänzt wird durch einen zweiten Reaktor (2) mit Gasverteiler (21), der durch die Austragsleitung (19) mit dem Reaktor (1) verbunden ist, der Reaktor (2) mit einer Kreisgasleitung (23) versehen ist, in welcher ein Verdichter (24) und nachgeschaltetem Wärmetauscher (25) eingefügt ist, eine Zuleitung (26) vor dem Verdichter (24) in die Kreisgasleitung (23) führt, am Kopf des Reaktors (2) sich eine Abgasleitung (27) befindet und über eine Austragsleitung (29) mit Absperrorgan (31) der Reaktor (2) in den Vorratsbunker (3) entleert werden kann, und die Polymerisation durchgeführt wird in Gegenwart eines Katalysators bestehend aus einer Übergangsmetallkomponente (Komponente A) und einer metallorganischen Verbindung (Komponente B), dadurch gekennzeichnet, daß die Komponente A hergestellt wurde durch

a) Umsetzung einer magnesiumorganischen Verbindung der Formel $R^1_xMgR^2_{2-x}$, worin $R^1$ und $R^2$ gleiche oder verschiedene Alkylreste mit 2 bis 12 Kohlenstoffatomen sind und x eine Zahl von 0 bis 1 ist, mit einem aliphatischen primären Chlorkohlenwasserstoff in einer Menge von 0,5 bis 2,5 mol des Chlorkohlenwasserstoffs, bezogen auf 1 mol der magnesiumorganischen Verbindung, gegebenenfalls in Gegenwart einer aluminiumorganischen Verbindung der Formel $AlR^3_n(OR^4)_{3-n}$, worin $R^3$ und $R^4$ gleiche oder verschiedene Alkylreste mit 1 bis 8 Kohlenstoffatomen sind und n 0, 1, 2 und 3 bedeutet oder in Gegenwart des Umsetzungsproduktes von Aluminiumtrialkylen oder Aluminiumdialkylhydriden mit 4 bis 20 Kohlenstoffatomen enthaltenden Diolefinen,

b) Behandlung des erhaltenen Feststoffs mit einem Alkohol in einer Menge von 0,001 bis 1 mol pro Grammatom des im Feststoff enthaltenen Magnesiums bei einer Temperatur von -20 bis 150°C, und

c) Umsetzung des so erhaltenen Trägermaterials mit einer oder mehreren Verbindungen der Formel $M^1X_m$ $(OR^5)_{4-m}$, worin $M^1$ Titan oder Zirkon, $R^5$ ein Alkylrest mit 2 bis 10 Kohlenstoffatomen, X ein Halogenatom und m eine ganze Zahl von 0 bis 4 ist, in einer Menge von 0,1 bis 5 mol pro Grammatom des im Trägermaterial enthaltenen Magnesiums bei einer Temperatur von 20 bis 180°C.

**Claims**

1. A process for preparing a polyolefin by polymerization of an alpha-olefin at a temperature from 50 to 150°C and a pressure from 1 to 40 bar in the presence of a catalyst comprising a transition metal component (component A) and an organometallic compound (component B), wherein component A has been prepared by

   a) reaction of an organomagnesium compound of the formula $R^1_xMgR^2_{2-x}$, in which $R^1$ and $R^2$ are identical or different alkyl radicals having from 2 to 12 carbon atoms and x is a number from 0 to 2, with an aliphatic primary chlorinated hydrocarbon in an amount from 0.5 to 2.5 mol of the chlorinated hydrocarbon per 1 mol of the organomagnesium compound,

   b) treatment of the solid obtained with an alcohol in an amount from 0.001 to 1 mol per gram atom of magnesium contained in the solid at a temperature from -20 to 150°C, and

   c) reaction of the support material thus obtained with one or more compounds of the formula $M^1X_m(OR^5)_{4-m}$, in which $M^1$ is titanium or zirconium, $R^5$ is an alkyl radical having from 2 to 10 carbon atoms, X is a halogen atom and m is an integer from 0 to 4, in an amount from 0.1 to 5 mol per gram atom of magnesium contained in the support material at a temperature from 20 to 180°C.

2. The process as claimed in claim 1, wherein the reaction of the organomagnesium compound with the aliphatic primary chlorinated hydrocarbon has been carried out in the presence of an organoaluminum compound of the formula $AlR^3_n(OR^4)_{3-n}$, in which $R^3$ and $R^4$ are identical or different alkyl radicals having from 1 to 8 carbon atoms and n is 0, 1, 2 and 3, or in the presence of the reaction product of trialkylaluminums or dialkylaluminum hydrides with diolefins containing from 4 to 20 carbon atoms.

3. The process as claimed in claim 1, wherein a dialkylmagnesium of the formula $[(n-C_4H_9)_{1.2-1.7}(n-C_8H_{17})_{0.3-0.8}Mg]$ was used.

4. The process as claimed in claim 1, wherein the alcohol used was ethanol.

5. The process as claimed in claim 1, wherein the compound of the formula $M^1X_m(OR^5)_{4-m}$, in which $M^1$, $R^5$ and m are as specified in claim 1, was $TiCl_4$.

6. The process as claimed in claim 1, wherein the catalyst component A was subjected to a prepolymerization.

7. The process as claimed in claim 1, wherein the polymerization is carried out continuously in one or more stages in a gas-phase process.

8. A process for preparing a polyolefin by polymerization of an alpha-olefin at a temperature from 50 to 150°C and a pressure from 1 to 40 bar, in one or more stages in a gas-phase process, where, in the case of a single-stage process, the apparatus comprises a reactor (1) having a gas distributor (11) and a circulating gas line (13) in which there is arranged a compressor (14) with a heat exchanger (15) downstream thereof, upstream of the compressor (14) a feed line (16) opens into the circulating gas line (13), a further feed line (18) leads into the reactor (1), at the top of the reactor (1) there is a waste gas line (17) in the circulating gas line (13), the reactor (1) can be discharged via a discharge line (19) and a shut-off device (31) into a storage hopper (3) which is provided with an offtake line (32), and, in the case of a two-stage process, the apparatus is supplemented with a second reactor (2) which has a gas distributor (21) and is connected to the reactor (1) via the discharge line (19), the reactor (2) is provided with a circulating gas line (23) in which there is inserted a compressor (24) and downstream heat exchanger (25), a feed line (26) leads into the circulating gas line (23) upstream of the compressor (24), there is a waste gas line (27) at the top of the reactor (2), and the reactor (2) can be discharged via a discharge line (29) with shut-off device (31) into the storage hopper (3), and the polymerization is carried out in the presence of a catalyst comprising a transition metal component (component A) and an organometallic compound (component B), wherein component A has been prepared by

   a) reaction of an organomagnesium compound of the formula $R^1_xMgR^2_{2-x}$, in which $R^1$ and $R^2$ are identical or different alkyl radicals having from 2 to 12 carbon atoms and x is a number from 0 to 1, with an aliphatic primary chlorinated hydrocarbon in an amount from 0.5 to 2.5 mol of the chlorinated hydrocarbon per 1 mol of the organomagnesium compound, if desired in the presence of an organoaluminum compound of the formula

$AlR^3_n(OR^4)_{3-n}$, in which $R^3$ and $R^4$ are identical or different alkyl radicals having from 1 to 8 carbon atoms and n is 0, 1, 2 and 3, or in the presence of the reaction product of trialkylaluminums or dialkylaluminum hydrides with diolefins containing from 4 to 20 carbon atoms,

b) treatment of the solid obtained with an alcohol in an amount from 0.001 to 1 mol per gram atom of magnesium contained in the solid at a temperature from -20 to 150°C, and

c) reaction of the support material thus obtained with one or more compounds of the formula $M^1X_m(OR^5)_{4-m}$, in which $M^1$ is titanium or zirconium, $R^5$ is an alkyl radical having from 2 to 10 carbon atoms, X is a halogen atom and m is an integer from 0 to 4, in an amount from 0.1 to 5 mol per gram atom of magnesium contained in the support material at a temperature from 20 to 180°C.

## Revendications

1. Procédé de préparation d'une polyoléfine par polymérisation d'une alpha-oléfine à une température de 50 à 150 °C et une pression de 1 à 40 bar, en présence d'un catalyseur à base d'un composant métal de transition (composant (A) et d'un composé organométallique (composant B), caractérisé en ce que l'on prépare le composant A par

a) réaction d'un composé organomagnésien de formule $R^1_xMgR^2_{2-x}$, dans laquelle $R^1$ et $R^2$ sont des restes alkyle identiques ou différents avec 2 à 12 atomes de carbone et x est un nombre compris entre 0 et 2, avec un hydrocarbure aliphatique primaire chloré dans une quantité de 0,5 à 2,5 moles d'hydrocarbure chloré par rapport à 1 mole du composé organomagnésien,

b) traitement de la matière solide obtenue par un alcool en une quantité de 0,001 à 1 mole par mole-atome de magnésium contenu dans la matière solide à une température de -20 à 150 °C, et

c) réaction de la matière de support ainsi obtenue avec un ou plusieurs composés de formule $M^1X_m(OR^5)_{4-m}$ dans laquelle $M^1$ représente le titane ou le zirconium, $R^5$ est un reste alkyle avec 2 à 10 atomes de carbone, X est un atome d'halogène et m est un nombre entier de 0 à 4, dans une quantité de 0,1 à 5 moles par mole-atome de magnésium contenu dans la matière de support à une température de 20 à 180 °C.

2. Procédé selon la revendication 1, caractérisé en ce que l'on met en oeuvre la réaction du composé organomagnésien avec l'hydrocarbure aliphatique primaire chloré en présence d'un composé organoaluminié de formule $AlR^3_n(OR^4)_{3-n}$, dans laqelle $R^3$ et $R^4$ sont des restes alkyle, identiques ou différents, avec 1 à 8 atomes de carbone et n vaut 0, 1, 2 et 3 ou en présence du produit de réaction des trialkylaluminiums ou des hydrures de dialkylaluminium avec des dioléfines comportant 4 à 20 atomes de carbone.

3. Procédé selon la revendication 1, caractérisé en ce que l'on utilise un dialkylmagnésium de formule $[(n\text{-}C_4H_9)_{1,2\text{-}1,7}(n\text{-}C_8H_{17})_{0,3\text{-}0,8}Mg]$.

4. Procédé selon la revendication 1, caractérisé en ce que l'on utilise l'éthanol en tant qu'alcool.

5. Procédé selon la revendication 1, caractérisé en ce que l'on utilise $TiCl_4$ en tant que composé de formule $M^1X_m(OR^5)_{4-m}$, dans laquelle $M^1$, $R^5$ et m ont les significations données dans la revendication 1.

6. Procédé selon la revendication 1, caractérisé en ce que le composant catalyseur A est soumis à une prépolymérisation.

7. Procédé selon la revendication 1, caractérisé en ce que l'on met en oeuvre la polymérisation en continu en une ou plusieurs étapes dans un procédé en phase gazeuse.

8. Procédé de préparation d'une polyoléfine par polymérisation d'une alpha-oléfine à une température de 50 à 150°C et une pression de 1 à 40 bar, en une ou plusieurs étapes dans un procédé en phase gazeuse, l'appareillage dans un procédé en une étape étant constitué d'un réacteur (1) avec un distributeur de gaz (11) et une conduite de circulation de gaz (13) dans laquelle est installé un compresseur (14), auquel est installé en arrière un échangeur de chaleur (15), avant le compresseur (14) débouche une conduite (16) dans la conduite de circulation de gaz (13), une autre conduite d'amenée (18) conduit au réacteur (1), à la tête du réacteur (1) une conduite d'évacuation de gaz (17) se trouve dans la conduite de circulation de gaz (13), on peut vider le réacteur (1) par l'intermédiaire d'une conduite d'évacuation (19) et d'un organe d'obturation (31) dans le réservoir (3) lequel est muni d'une conduite de reprise (32) et dans un procédé en deux étapes, l'appareillage est complété d'un deuxième réacteur (2) avec un distributeur de gaz (21) qui est relié au réacteur (1) par l'intermédiaire de la conduite d'évacuation (19), le réacteur (2) est muni d'une conduite de circulation de gaz (23), dans laquelle est installé un compresseur (24) et un échangeur de chaleur (25) installé en arrière, une conduite d'amenée (26) se trouve avant le compresseur (24) dans la conduite de circulation de gaz (23), à la tête du réacteur (2) se trouve une conduite d'évacuation de gaz (27) et on peut vider le réacteur (2) par l'intermédiaire d'une conduite d'évacuation (29) avec l'organe d'obturation (31) dans le réservoir (3), et on met en oeuvre la polymérisation en présence d'un catalyseur constitué d'un composant à base de métal de transition (composant A) et d'un composé organométallique(composant B), caractérisé en ce que l'on prépare le composant par

a) réaction d'un composé organomagnésien de formule $R^1_x MgR^2_{2-x}$, dans laquelle $R^1$ et $R^2$ sont des restes alkyle identiques ou différents avec 2 à 12 atomes de carbone et x est un nombre de 0 à 2, avec un hydrocarbure aliphatique primaire chloré, dans une quantité de 0,5 à 2,5 moles d'hydrocarbure chloré par rapport à 1 mole du composé organo-magnésien et éventuellement d'un composé organo-aluminié de formule $AlR^3_n(OR^4)_{3-n}$ dans laquelle $R^3$ et $R^4$ sont des restes alkyle identiques ou différents avec 1 à 8 atomes de carbone et n vaut 0, 1, 2 et 3, ou en présence du produit de réaction de trialkylaluminium ou d'hydrures de dialkylaluminium avec des dioléfines comportant 4 à 20 atomes de carbone,

b) traitement de la matière solide obtenue par un alcool en une quantité de 0,001 à 1 mole par mole-atome de magnésium contenu dans la matière solide, à une température de -20 à 150 °C, et

c) réaction de la matière de support ainsi obtenue avec un ou plusieurs composés de formule $M^1 X_m(OR^5)_{4-m}$, dans laquelle $M^1$ représente le titane ou le zirconium, $R^5$ est un reste alkyle avec 2 à 10 atomes de carbone, X est un atome d'halogène et m est un nombre entier de 0 à 4, dans une quantité de 0,1 à 5 moles par mole-atome de magnésium contenu dans la matière de support à une température de 20 à 180 °C.

_Fig. 1_

Fig. 2